# EUROPÄISCHE PATENTSCHRIFT

(11) **EP 2 653 023 B1**
(45) Veröffentlichungstag und Bekanntmachung des Hinweises auf die Patenterteilung: **04.07.2018**
(21) Anmeldenummer: 13401036.2
(22) Anmeldetag: 15.04.2013
(51) Int. Cl.: A01C 15/00

(54) **Behälter landwirtschaftlicher Verteilmaschinen**
Container for an agricultural spreading machine
Récipient de machines de distribution agricoles

(30) Priorität: 20.04.2012 DE 102012103481
(43) Veröffentlichungstag der Anmeldung: 23.10.2013
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Walter, Achim, 49078 Osnabrück (DE)

(56) Entgegenhaltungen:
- EP-A1- 2 227 934
- DE-B4- 10 348 067
- DE-U1-202007 007 024

## Beschreibung

Die Erfindung betrifft einen Behälter landwirtschaftlicher Verteilmaschinen gemäß des Oberbegriffes des Patentanspruches 1.

Ein derartiger Behälter landwirtschaftlicher Verteilmaschinen ist in der DE 103 48 067 B4 beschrieben.

Die im Vorratsbehälter angeordnete Schutzeinrichtung ist als siebartiges Element ausgebildet und im oberen Bereich innerhalb eines Behälters einer Verteilmaschine angeordnet. Um einen unbefugten Zugang zu sich in dem Behälter befindlichen motorisch bewegbaren Teilen zu verhindern, ist die Schutzeinrichtung mittels zumindest eines Verriegelungselementes verriegelt. Das Verriegelungselement kann nur durch ein in einer Aussparung des Verbindungselementes einzusteckende Handhabe verschwenkt werden, so dass dann nur in bewusster Weise die Schutzvorrichtung aufgeklappt werden kann.

Um die Schutzvorrichtung über das Verriegelungselement zu verriegeln, muss die Schutzvorrichtung unter das Verriegelungselement gedrückt werden. Falls dies vergessen wird beim Schließen der Schutzeinrichtung, kann aus der Ferne nicht leicht erkannt werden, ob die Schutzvorrichtung tatsächlich verriegelt ist.

Der Erfindung liegt die Aufgabe zu Grunde, dem Bediener der Verteilmaschine in einfacher Weise anzuzeigen, dass die Schutzeinrichtung offensichtlich nicht richtig verriegelt ist.

Diese Aufgabe wird erfindungsgemäß dadurch gelöst, dass zwischen der Schutzeinrichtung und den Behälterteilen auf der Seite der Schutzeinrichtung, auf welcher sie mit Gelenken an den Behälterteilen angelenkt ist, federnde und die Schutzeinrichtung in Öffnungsrichtung bewegende Zwischenelemente angeordnet sind.

Infolge dieser Maßnahmen wird die Schutzeinrichtung, wenn sie nicht korrekt verriegelt ist, durch die federnden Zwischenelemente soweit von der eigentlichen Schutzposition gehalten, dass für den Bediener sofort erkennbar ist, dass die Schutzeinrichtung sich nicht der Schutzposition befindet und noch in Schutzposition verriegelt werden muss. So lässt sich ohne weiteren technischen Aufwand, wie der Einsatz von Überwachungssensoren, Überwachungselektronik eine robuste und sicher arbeitende Anzeigemöglichkeit zur Anzeige der Verriegelung der Schutzeinrichtung in Verriegelungsposition schaffen.

Eine einfache Ausgestaltung der federnde Zwischenelemente lässt sich dadurch erreichen, dass die Zwischenelemente als Gummipuffer oder Federelemente ausgebildet sind.

Um in ausreichender Weise sichtbar zu machen, ob die Schutzeinrichtung sich in der Verriegelungsposition befindet, ist vorgesehen, dass die Schutzeinrichtung über die Zwischenelemente um zumindest 10° aus der geschlossenen Verriegelungsstellung in Öffnungsrichtung drückbar ist.

Um ausreichend deutlich sichtbar zu machen, dass die Schutzeinrichtungen sich nicht in Verriegelungsposition befindet, ist vorgesehen, dass die Schutzeinrichtung über die Zwischenelemente nach der Entriegelung des Verriegelungselementes zumindest bis außerhalb des Verriegelungsbereiches des Verriegelungselementes drückbar ist.

Weitere Einzelheiten der Erfindung sind der Beispielsbeschreibung und den Zeichnungen zu entnehmen. Hierbei zeigen
- Fig. 1: die in einem trichterförmigen Bereich eines Vorratsbehälters angeordnete Schutzvorrichtung mit Verriegelungselement in Teilansicht und den perspektivischer Darstellung,
- Fig. 2: die im Vorratsbehälter angeordnete Schutzvorrichtung in der Position gemäß Fig. 1 in Verriegelungsstellung und im Schnitt II - II,
- Fig. 3: die im Vorratsbehälter angeordnete Schutzvorrichtung nach dem Lösen der Verriegelung und in durch die federnden Zwischenelemente hochgedrückten Position in der Darstellungsweise nach Fig. 2 und

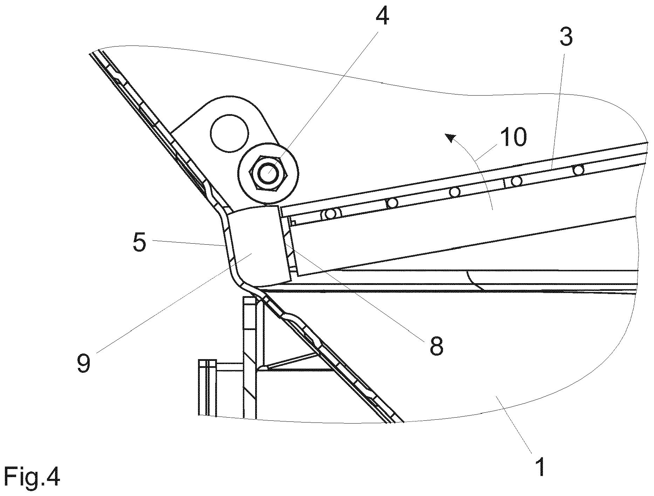

- Fig. 4: die Anordnung der federnden Zwischenelemente entsprechend Fig. 3 in vergrößertem Maßstab.

In dem unteren Bereich 1, der trichterförmig ausgebildet ist, des Vorratsbehälters 2 einer landwirtschaftlichen Verteilmaschine ist die als Siebelement 3 ausgebildete Schutzvorrichtung angeordnet. Das Siebelement 3 ist auf der einen Seite mittels nicht dargestellten Gelenken 4 an den als Behälterwand 5 ausgebildeten Behälterteilen des Behälters 2 schwenkbar befestigt. Andererseits liegt das Siebelement 3 beabstandet zu den Gelenken 4 mittels Auflageelementen 6, die an den als Behälterwand 5 ausgebildeten Behälterteilen befestigt sind, an Behälterteilen 5, die von der Behälterwand gebildet werden, an.

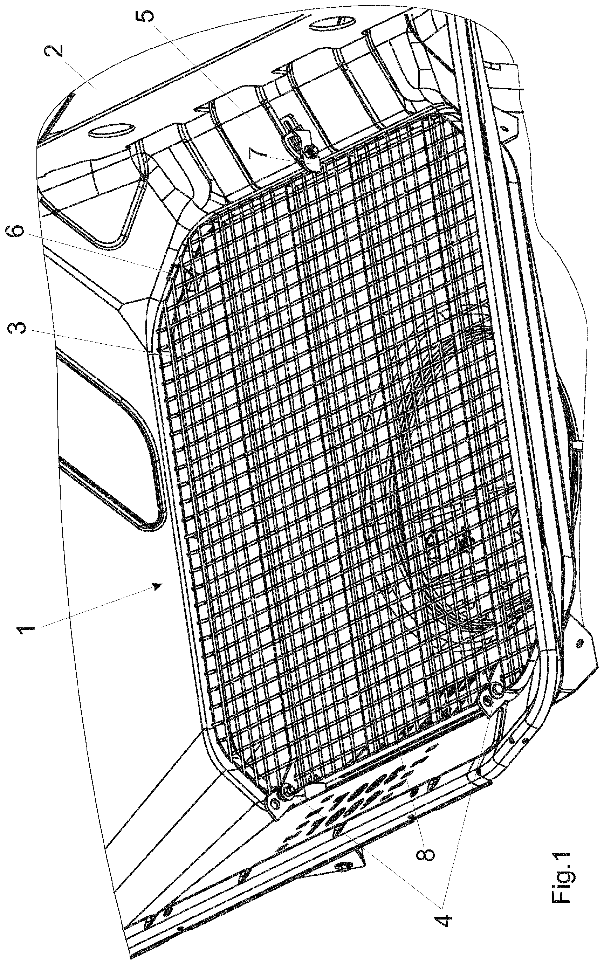

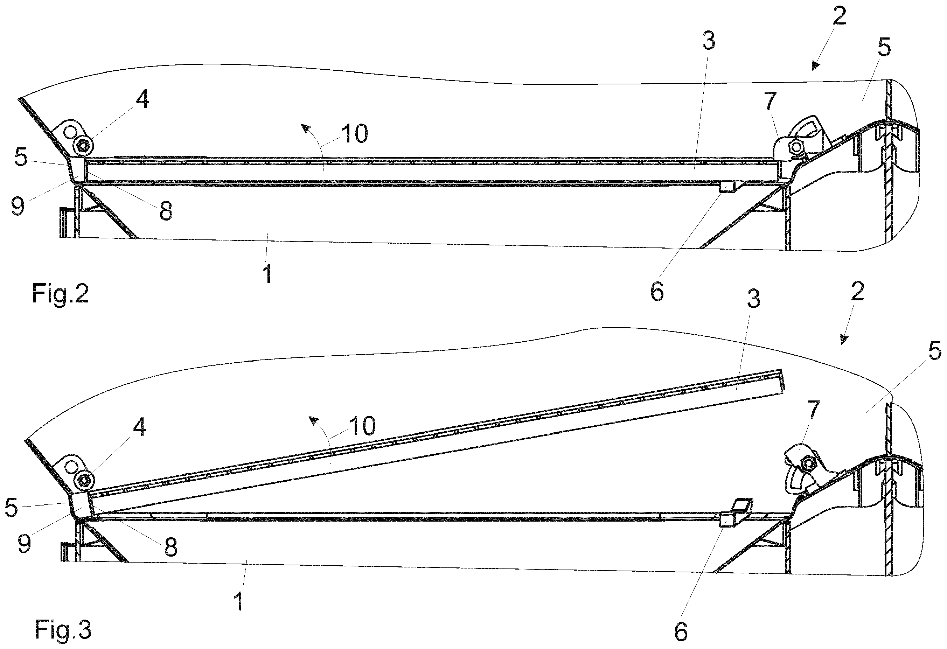

Auf der den Gelenken 4 gegenüberliegenden Seite der Schutzeinrichtung 3 ist ein Verriegelungselement 7 zur Verriegelung des Siebelementes in der Schutzposition gemäß den Fig. 1 und 2 zugeordnet. Dadurch, dass das Siebelement 3, welches die Schutzeinrichtung bildet, nicht unmittelbar an der Wand 5 des Behälters 2 anliegt, sondern auf an der Behälterwand 5 befestigten Auflageelementen 6 aufliegt, wird eine schonende Auflage des Siebelementes 3 an der Behälterwand 4 erreicht, so dass das Siebelement 3 bzw. an dem Siebelement 3 befestigte Gegenlager nicht unmittelbar an der Behälterwand 5 anliegt und somit keine Farbe abschaben kann.

Zwischen der Schutzeinrichtung 3 und den Behälterteilen 5 auf der Seite 8 der Schutzeinrichtung 3, auf welcher sie mit Gelenken 4 an den Behälterteilen 5 angelenkt ist, sind als Gummipuffer 9 ausgebildete federnde und die Schutzeinrichtung 3 in Öffnungsrichtung, wie durch den Pfeil 10 angedeutet ist, bewegende Zwischenelemente angeordnet.

Die Schutzeinrichtung 3 ist über die Gummipuffer 9 um zumindest 10° aus der geschlossenen Verriegelungsstellung gemäß den Fig. 1 und 2 in Öffnungsrichtung 10 drückbar, so sie einen Abstand zu dem Verriegelungselement 7 aufweist.

In dieser Position ist die Schutzeinrichtung 3 durch das Hochdrücken über die Zwischenelemente 9 nach der Entriegelung des Verriegelungselementes 7 zumindest bis außerhalb des Verriegelungsbereiches des Verriegelungselementes 7 gedrückt.

Die hochgedrückte Position des Siebes 3 gemäß Fig. 3 kann Bediener sofort erkannt werden. Diese hochgedrückte Position des Siebes 3 signalisiert dem Bediener der Maschine, dass das Sieb 3 nicht in verriegelter Schutzposition befindet und noch nicht verriegelt ist. Der Bediener kann jetzt die Verriegelung des Siebes in Schutzposition gemäß den Fig. 1 und 2 vornehmen.

Die Zwischenelemente können auch als Federelemente ausgebildet sein.

## Patentansprüche

1. Behälter landwirtschaftlicher Verteilmaschinen mit zumindest einer Schutzeinrichtung (3), die den Zugang zu bewegten Teilen innerhalb des Behälters (2) verhindert, wobei der Schutzeinrichtung (3) zumindest ein Verriegelungselement (7) zur Verriegelung der Schutzeinrichtung (3) in der Schutzstellung zugeordnet ist, wobei die Schutzeinrichtung (3) auf der einen Seite mittels Gelenken (4) an Behälterteilen schwenkbar befestigt ist und andererseits beabstandet zu den Gelenken mittels Auflageelementen (6) an Behälterteilen anliegt, **dadurch gekennzeichnet, dass** zwischen der Schutzeinrichtung (3) und den Behälterteilen auf der Seite der Schutzeinrichtung, auf welcher sie mit Gelenken (4) an den Behälterteilen angelenkt ist, federnde und die Schutzeinrichtung (3) in Öffnungsrichtung bewegende Zwischenelemente angeordnet sind.

2. Behälter nach Anspruchl , **dadurch gekennzeichnet, dass** die Zwischenelemente als Gummipuffer (9) ausgebildet sind.

3. Behälter nach Anspruchl , **dadurch gekennzeichnet, dass** die Zwischenelemente als Federelemente ausgebildet sind.

4. Behälter nach zumindest einem der vorstehenden Anspruche , **dadurch gekennzeichnet, dass** die Schutzeinrichtung (3) über die Zwischenelemente um zumindest 10° aus der geschlossenen Verriegelungsstellung in Öffnungsrichtung drückbar ist.

5. Behälter nach zumindest einem der vorstehenden Anspruche , **dadurch gekennzeichnet, dass** die Schutzeinrichtung (3) über die Zwischenelemente nach der Entriegelung des Verriegelungselementes (7) zumindest bis außerhalb des Verriegelungsbereiches des Verriegelungselementes (7) drückbar ist.

## Claims

1. Container for agricultural spreading machines, having at least one safeguarding device (3), which prevents access to moving parts within the container (2), wherein the safeguarding device (3) is assigned at least one locking element (7) for locking the safeguarding device (3) in the safeguarding position, wherein, on the one side, the safeguarding device (3) is fastened on container parts such that it can be pivoted by means of articulations (4) and, on the other side, at a distance apart from the articulations, it butts against container parts by means of bearing elements (6), **characterized in that** on that side of the safeguarding device on which the latter is fitted on the container part by means of articulations (4), resilient intermediate elements, which move the safeguarding device (3) in the opening direction, are arranged between the safeguarding device (3) and the container parts.

2. Container according to Claim 1, **characterized in that** the intermediate elements are designed in the form of rubber buffers (9).

3. Container according to Claim 1, **characterized in that** the intermediate elements are designed in the form of spring elements.

4. Container according to at least one of the preceding claims, **characterized in that** the safeguarding device (3) can be pushed in the opening direction, out of the closed, locked position, through at least 10° via the intermediate elements.

5. Container according to at least one of the preceding claims, **characterized in that**, following unlocking of the locking element (7), the safeguarding device (3) can be pushed at least to outside the locking region of the locking element (7) via the intermediate elements.

## Revendications

1. Récipient de machines de distribution agricoles avec au moins un dispositif de protection (3), qui empêche l'accès à des parties mobiles à l'intérieur du récipient (2), dans lequel au moins un dispositif de verrouillage (7) est associé au dispositif de protection (3) pour le verrouillage du dispositif de protection (3) dans la position de protection, dans lequel le dispositif de protection (3) est d'une part fixé de façon pivotante au moyen d'articulations (4) à des parties du récipient et d'autre part repose à distance des articulations sur des parties du récipient au moyen d'éléments d'appui (6), **caractérisé en ce que** des éléments intermédiaires élastiques et déplaçant le dispositif de protection (3) dans la direction d'ouverture sont disposés entre le dispositif de protection (3) et les parties de récipient sur le côté du dispositif de protection sur lequel il est articulé aux parties du récipient avec des articulations (4).

2. Récipient selon la revendication 1, **caractérisé en ce que** les éléments intermédiaires sont réalisés sous la forme de coussins en caoutchouc (9).

3. Récipient selon la revendication 1, **caractérisé en ce que** les éléments intermédiaires sont réalisés sous la forme d'éléments à ressort.

4. Récipient selon au moins une des revendications précédentes, **caractérisé en ce que** le dispositif de protection (3) peut être poussé par les éléments intermédiaires d'au moins 10° hors de la position fermée dans la direction d'ouverture.

5. Récipient selon au moins une des revendications précédentes, **caractérisé en ce que** le dispositif de protection (3) peut être poussé par les éléments intermédiaires après le déverrouillage de l'élément de verrouillage (7) au moins jusqu'à l'extérieur de la plage de verrouillage de l'élément de verrouillage (7).
